# EUROPEAN PATENT APPLICATION

(11) **EP 2 706 762 A2**
(43) Date of publication of application: **12.03.2014**
(21) Application number: 13182833.7
(22) Date of filing: 03.09.2013
(51) Int. Cl.: H04S 3/00

(54) **Multimedia processing system and audio signal processing method**

(30) Priority: 05.09.2012 TW 101132297
(71) Applicant: Acer Incorporated, Taipei Hsien 221 (TW)
(72) Inventor: Ko, Chueh-Pin, 221 Hsichih, New Taipei City (TW)
(74) Representative: 2K Patentanwälte Blasberg Kewitz & Reichel

(57) **Abstract**

A multimedia processing system is provided. The system comprises: a depth analyzing unit configured to receive an input image and retrieve a depth image according to the input image; and a audio processing unit configured to receive an input audio signal and the depth image, detect an audio object and position information corresponding to the audio object from the depth image, and retrieve an acoustic frequency range corresponding to the audio object from the input audio signal; wherein when the position information exceeds a predetermined range, the audio processing unit adjusts the acoustic frequency range of the input audio signal according to the position information to generate an output audio signal.

## Description

### CROSS REFERENCE TO RELATED APPLICATIONS

This Application claims priority of Taiwan Patent Application No. 101132297, filed on Sep. 5, 2012, the entirety of which is incorporated by reference herein.

### BACKGROUND OF THE INVENTION

### Field of the Invention

The present invention relates to audio processing, and in particular to a multimedia processing system and an audio processing method for processing audio signals by using depth images of stereoscopic images.

### Description of the Related Art

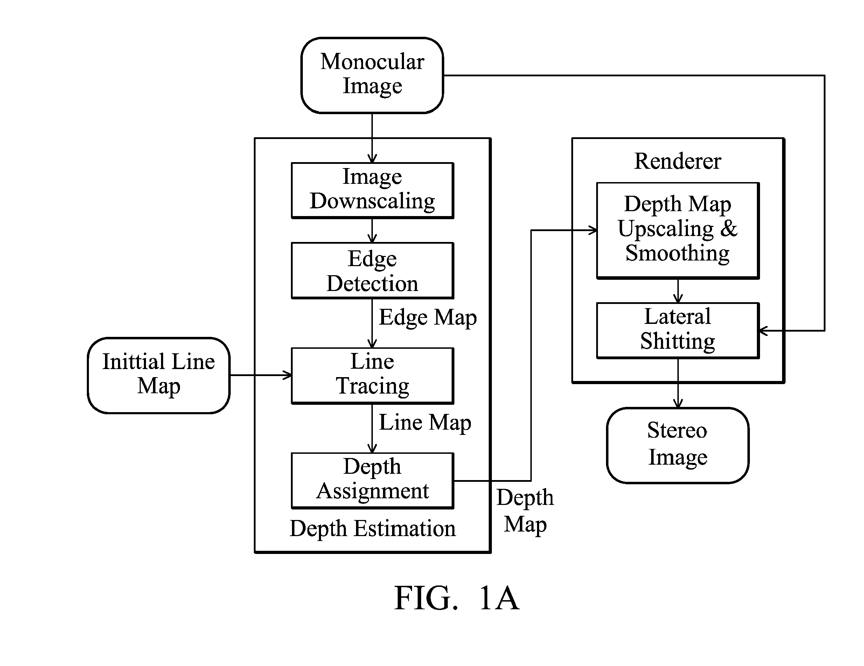

As the technology of stereoscopic-image display devices develops, the techniques for processing stereoscopic images have become more and more crucial. Generally, stereoscopic images can be obtained in several ways. For example, stereoscopic images can be captured by a depth camera capable of retrieving depth information, or captured by dual cameras capable of simulating the human eye, or converted from two-dimensional images through appropriate image processing means. FIG. 1A illustrates a flow chart of conventional algorithms for conversion of a two-dimensional image to a stereoscopic image. As illustrated in FIG. 1A, the processing procedure for converting a two-dimensional image to a stereoscopic image can be roughly classified as having some of the steps of: image shrinking, edge detection, line tracing, depth assignment, depth image enlargement and smoothing, and lateral shifting. When the depth image is built, the depth image can be combined with the original two-dimensional image to generate a stereoscopic image. In conventional algorithms for converting a two-dimensional image to a stereoscopic image, some methods can be used, such as building a space model, edge detection, and calculating disappearing points, which may build the depth image by analyzing one or more images.

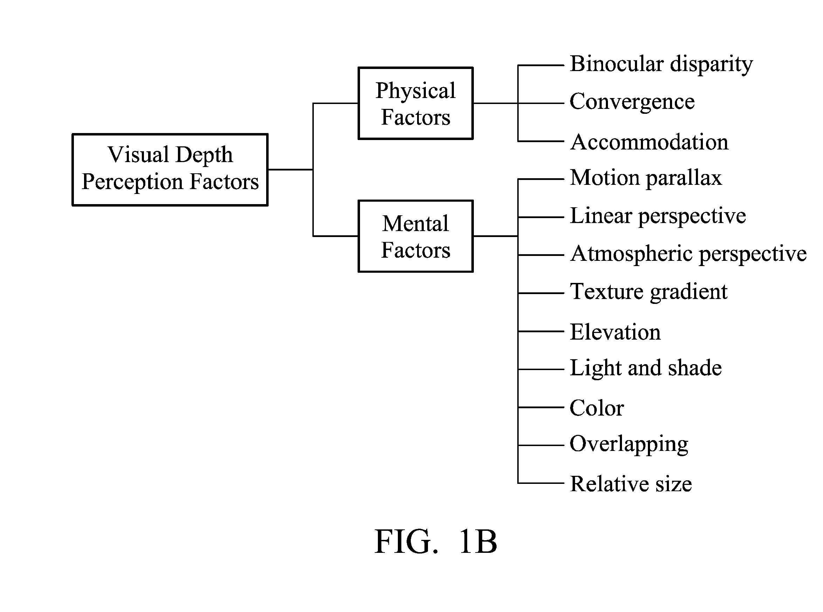

FIG. 1B illustrates a diagram of the visual depth perception factors. As illustrated in FIG. 1B, the visual depth perception factors can be classified as physical factors and mental factors. Generally, only some mental factors are used in the algorithm operations of the depth image corresponding to the stereoscopic image converted from a two-dimensional image. For example, yellow objects, objects with a great amount of motion, or large objects are usually considered as objects with the least depth due to the mental factors. Conversely, blue objects, objects with a small amount of motion, or small objects are usually considered as objects with the deepest depth due to mental factors, and objects with similar textures are considered as having the same depth.

Depth information is the key factor in stereoscopic-image display technologies. After the depth image is generated, only the relative relationship between each object in the image can be defined. However, conventional stereoscopic-image display technologies usually focus on ways to generate the correct depth information without using the depth information further to process the stereoscopic image.

### BRIEF SUMMARY OF THE INVENTION

A detailed description is given in the following embodiments with reference to the accompanying drawings.

In an exemplary embodiment, a multimedia processing system is provided. The system comprises: a depth analyzing unit configured to receive an input image and retrieve a depth image according to the input image; and a audio processing unit configured to receive an input audio signal and the depth image, detect an audio object and position information corresponding to the audio object from the depth image, and retrieve an acoustic frequency range corresponding to the audio object from the input audio signal; wherein when the position information exceeds a predetermined range, the audio processing unit adjusts the acoustic frequency range of the input audio signal according to the position information to generate an output audio signal.

In another exemplary embodiment, an audio signal processing method applied in a multimedia processing system is provided. The method comprises the following steps of: receiving an input image, and generating a depth image according to the input image; receiving an input audio signal and the depth image, and detecting an audio object and position information corresponding to the audio object from the depth image; retrieving an acoustic frequency range corresponding to the audio object from the input audio signal; and adjusting the acoustic frequency range of the input audio signal according to the position information to generate an output audio signal when the position information exceeds a predetermined range.

### BRIEF DESCRIPTION OF THE DRAWINGS

The present invention can be more fully understood by reading the subsequent detailed description and examples with references made to the accompanying drawings, wherein:

FIG. 1A illustrates a flow chart of conventional algorithms for conversion of a two-dimensional image to a stereoscopic image;

FIG. 1B illustrates a diagram of the visual depth perception factors;

FIG. 2 is a block diagram of a multimedia processing system 200 according to an embodiment of the invention;

FIGs. 3D∼3D are diagrams illustrating audio processing unit 230 adjusting ratios between each channel by recognizing the main object according to an embodiment of the invention;

FIGs. 4A∼4F are diagrams illustrating the audio processing unit 230 adjusting the ratio of each channel by recognizing the main object according to another embodiment of the invention;

FIG. 5 is a diagram illustrating the specific acoustic frequencies used in the audio processing unit 230 according to an embodiment of the invention;

FIG. 6 is a table illustrating audio processing unit adjusting acoustic frequencies according to an embodiment of the invention;

FIG. 7 is a flow chart illustrating the audio signal processing method according to an embodiment of the invention; and

FIG. 8 is a diagram illustrating the frequency range of multiple languages detected by the audio processing unit according to an embodiment of the invention.

### DETAILED DESCRIPTION OF THE INVENTION

The following description is of the best-contemplated mode of carrying out the invention. This description is made for the purpose of illustrating the general principles of the invention and should not be taken in a limiting sense. The scope of the invention is best determined by reference to the appended claims.

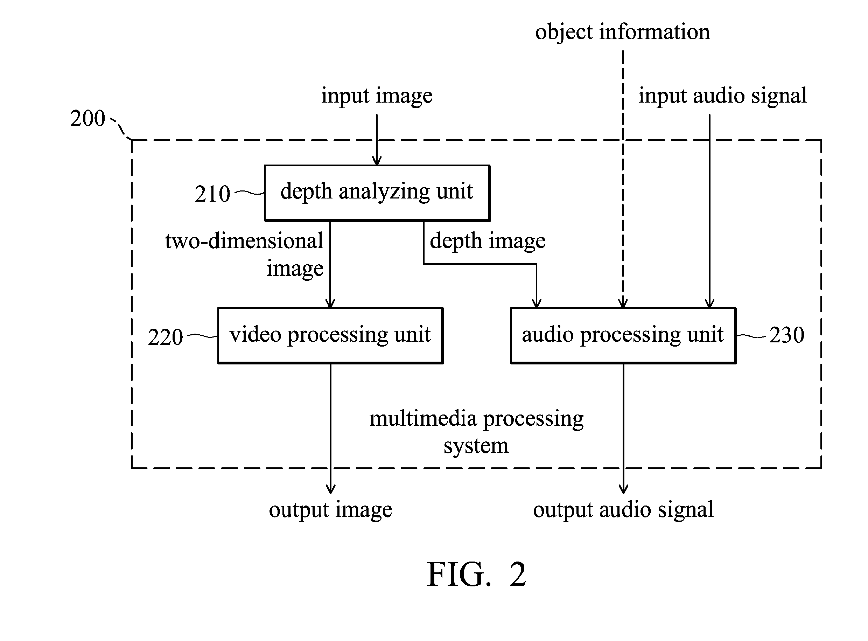

FIG. 2 is a block diagram of a multimedia processing system 200 according to an embodiment of the invention. The multimedia processing system 200 may comprise a depth analyzing unit 210, a video processing unit 220 and an audio processing unit 230. The depth analyzing unit 210 is configured to receive an input image, and obtain a two-dimensional image and a corresponding depth image according to the input image. It should be noted that the input image can be a two-dimensional image, a three-dimensional image, or a stereoscopic image (i.e. a two-dimensional image and a corresponding depth image). In other words, if the input image is a stereoscopic image, the depth analyzing unit 210 may obtain the depth image of the stereoscopic image directly. If the input image is a two-dimensional image or a three-dimensional image, the depth analyzing unit 210 has to calculate the corresponding depth image. The video processing unit 220 is configured to receive the two-dimensional image and the corresponding depth image from the depth analyzing unit 210, and generate an output image according to the received two-dimensional image and the corresponding depth image. It should be noted that the input images received by the depth analyzing unit 210 can be a two-dimensional image, a three-dimensional image, or a two-dimensional image with a corresponding depth image. Also, the output image generated by the video processing unit 220 may also be a two-dimensional image or a stereoscopic image. The audio processing unit 230 is configured to receive an input audio signal, and adjust the input audio signal to generate an output audio signal. In an embodiment, the input audio signal and the output audio signal can be an audio signal with a mono channel, stereo channels or multi-channel, such as 2.1, 4.1, 5.1, 6.1 or 7.1 channels, and the number of channels of the output audio signal is larger than or equal to the number of channels of the input audio signal. There is a strength ratio, a delay ratio and a frequency ratio between each channel of the output audio signal. Each channel may have a corresponding volume, which indicates that the aforementioned audio factors correspond to the volume of left/right channels, balance of left/right channels, the equalizer, and the sound field, etc.

In an embodiment, the audio signal processing unit 230 may detect the depth image of the main object from the received depth image. That is, the audio signal processing unit 230 may retrieve the depth image of the main object by analyzing image features of the main object from the depth image generated by the depth analyzing unit 210. For example, the received depth image can be classified into a static depth image and a dynamic depth image. The static depth image can be specific depth values (e.g. gray level 0, 10, or 250), absolute extrema, or local extrema of the received depth image. The dynamic depth image can be classified into motion information and depth variation information. The motion information may indicate a specific displacement vector of a set of pixels within the same depth distribution of the depth image. The depth variation information may indicate the variation of depth values of pixels or sets having the same coordinates in the depth image. The depth analyzing unit 210 may retrieve the coordinates of the main object from the depth variation information. The coordinates can be one-dimensional, two-dimensional, or three-dimensional, and the value of the coordinates can be an absolute value (e.g. (200, 300, 251) or a relative value (e.g. 2:3, 40% or 0.6, etc.). That is, the retrieved coordinates may indicate the position of the main object in the two-dimensional image. Also, the coordinates of the main object may include information about the size of the main object.

In another embodiment, the audio processing unit 230 may transform the retrieved coordinate of the main object into ratios between each channel. That is, the audio processing unit 230 may retrieve the position of the main object in the two-dimensional image, and adjust the relative relationship between each channel. In yet another embodiment, the audio processing unit 230 may detect the main object, keep tracking the variation of the coordinates with the motion of the main object, and generate corresponding ratios of each channel according to the variation of the coordinates.

In still another embodiment, in addition to recognizing the main object from the two-dimensional image or the depth image, the audio processing unit 230 may optionally receive external object information, which comprises the coordinates, position, size, and region of the main object, such as the magnificent motion of pixels in a wide range, significant changes of motion vectors, or recognized face information. The audio processing unit 230 may further adjust each channel of the input audio signal according to the received external object information to generate the output audio signal.

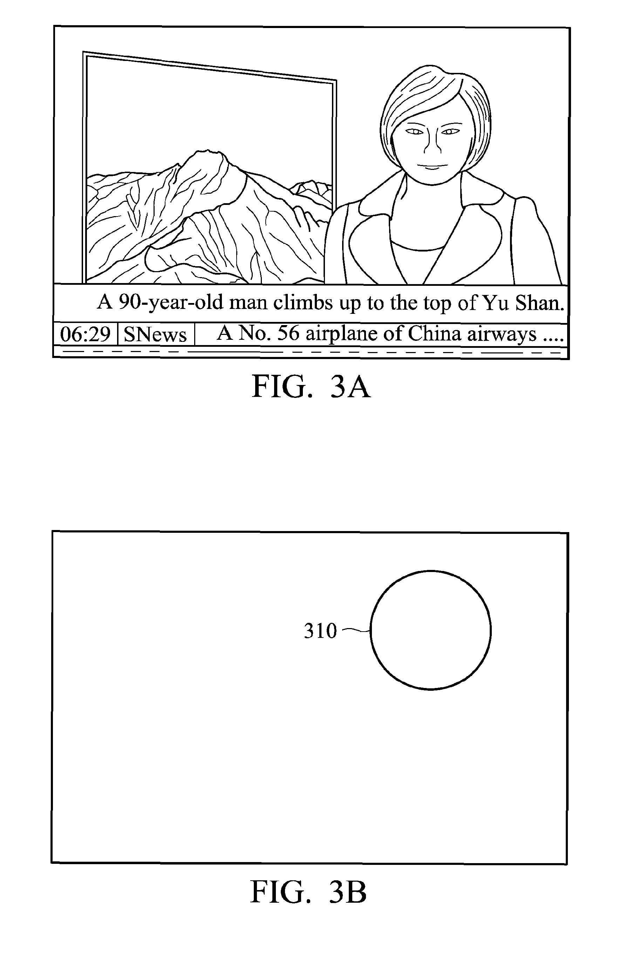

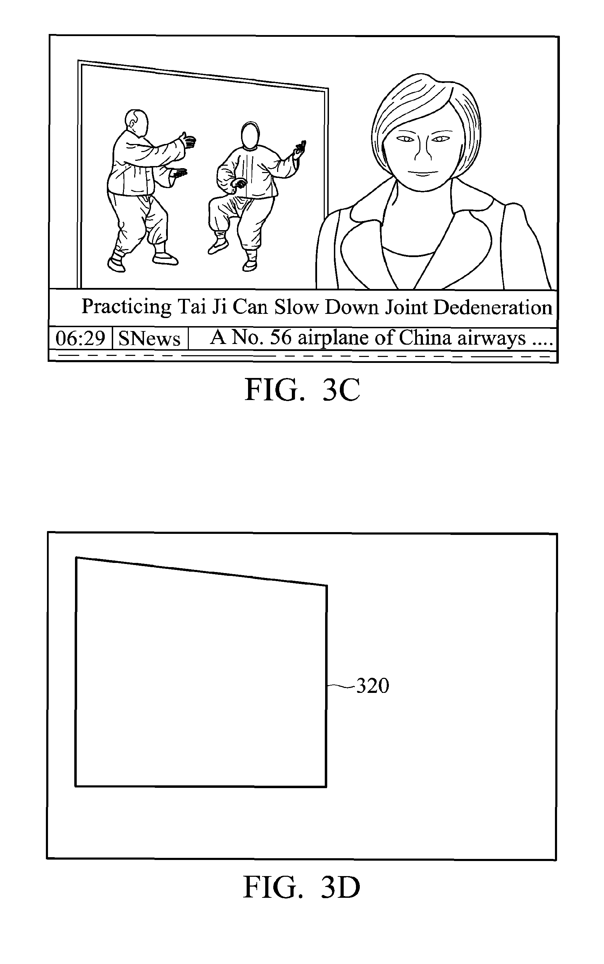

FIGs. 3D∼3D are diagrams illustrating audio processing unit 230 adjusting ratios between each channel by recognizing the main object according to an embodiment of the invention. As illustrated in FIG. 3A and 3B, the audio processing unit 230 may determine the position of the main object 310 (e.g. the news reporter) according to the object information, wherein the position of the main object 310 is roughly 2/5 the screen width away from the right side of the screen. Then, the audio processing unit 230 adjusts the ratio (i.e. the amplitude ratio) between the left channel (L) and the right channel (R) of the input audio signal (e.g. stereo channel) to L: R = 60%: 40%. As illustrated in FIG. 3C and 3D, the audio processing unit 230 may determine the position of the main object 320 (e.g. the news screen) from the depth images of the continuous images, wherein the position of the main object 320 is roughly 3/10 the screen width away from the left side of the screen. Then, the audio processing unit 230 may adjust the ratio between the left channel (L) and the right channel (R) of the input audio signal (e.g. stereo channel) to L: R = 32% : 68%. It should be noted that, there is a corresponding relationship in the ratio between the left channel and the right channel. However, the ratio between the left channel and the right channel in the aforementioned embodiments is not limited, and it can be adjusted adaptively in different cases. For those skilled in the art, it should be appreciated that the aforementioned embodiment merely discloses a way to adjust channels using the audio processing unit 230, but the invention is not limited thereto.

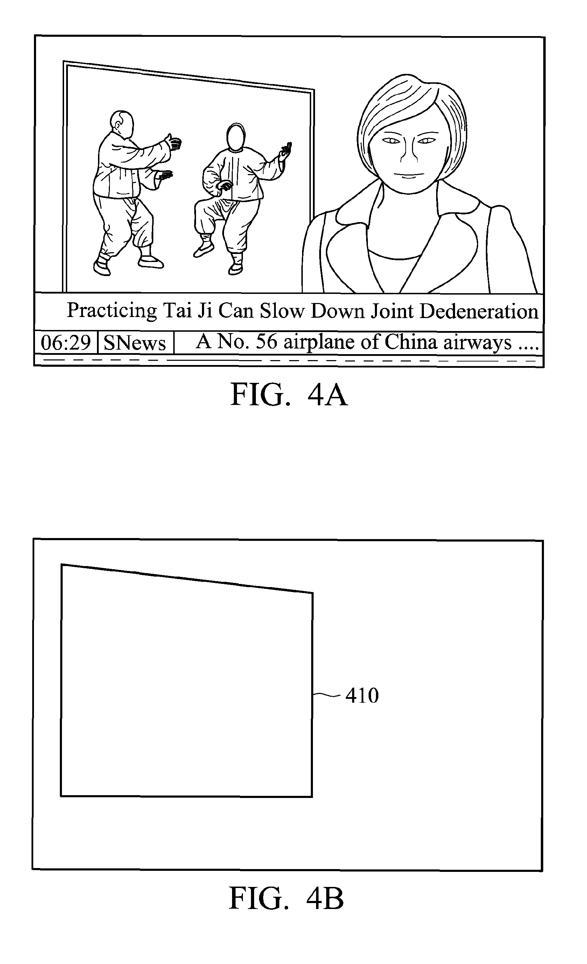

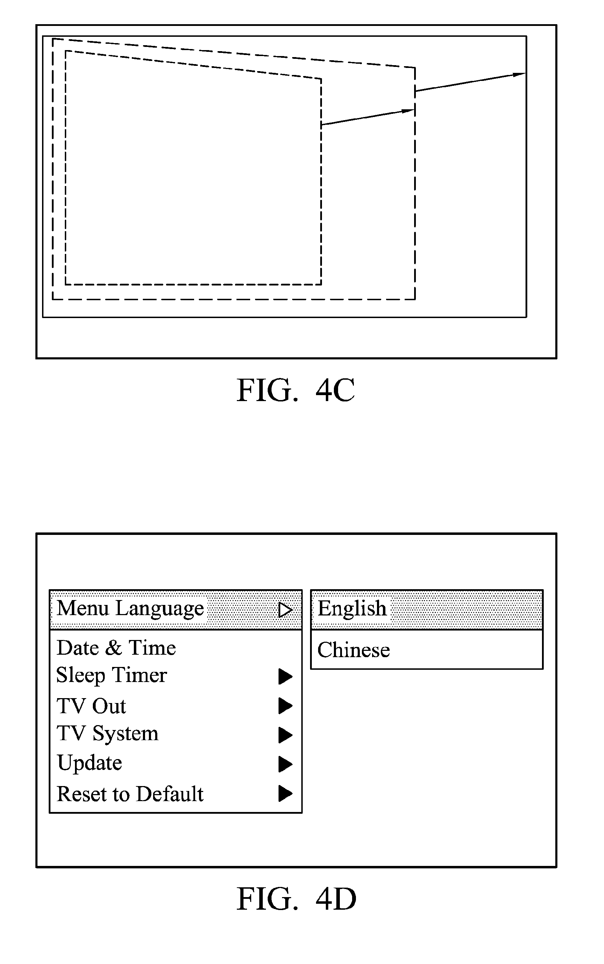

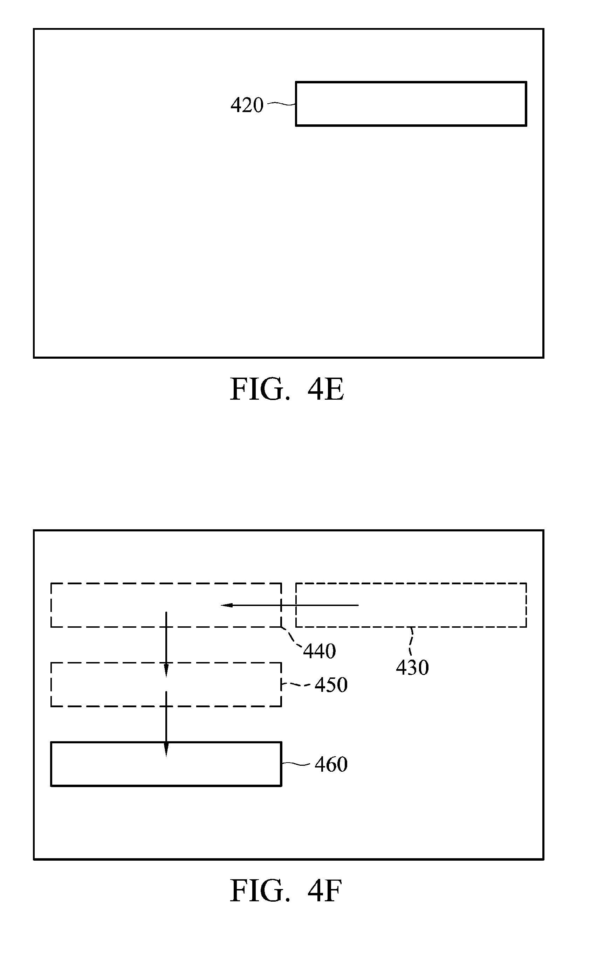

FIGs. 4A∼4F are diagrams illustrating the audio processing unit 230 adjusting the ratio of each channel by recognizing the main object according to another embodiment of the invention. As illustrated in FIGs. 4A to 4C, the object 410 is gradually enlarged to full screen during the display procedure. As shown in FIG. 4A, the object 410 is 2/5 the screen width away from the left side of the screen, and the audio processing unit 230 sets the ratio between the left channel and the right channel to L: R = 2 : 3. As shown in FIG. 4B, the object 410 is gradually enlarged, and the audio processing unit 230 adjusts the ratio between the left channel and the right channel to L: R = 2.2 : 2.8 (i.e. L : R = 45% : 55%). As shown in FIG. 4C, the object 410 is enlarged to full screen, and the audio processing unit 230 adjusts the ratio between the left channel and the right channel to L: R = 2.5 : 2.5 (i.e. L: R = 50% : 50%).

As shown in FIGs 4D∼4F, a user may alternate the active button from "English" to "Reset to Default" on the on-screen display interface of the display device. For example, the object 420 is at position 430 in the beginning, and then is being moved to positions 440, 450 and 460 sequentially. If the coordinates of positions 430, 440, 450 and 460 are (300, 500, 200), (200, 500, 200), (200, 300, 150), and (200, 200, 200), respectively, it may indicate that the depth of the object 420 also varies in addition to the position. The audio processing unit 230 may correspondingly adjust the input audio signal to 30% of the left channel with a 2-millisecond delay, 40% of the left channel with a 1.8-millisecond delay, and 50% of the left channel with a 1.6-millisecond delay, respectively. It should be noted that, in order to maintain synchronization between the output audio signals and output images, the audio processing unit 230 may further comprise a synchronization unit (not shown in FIG. 1) configured to process the synchronization between the audio signals and video signals, which can be regarded as "lip sync".

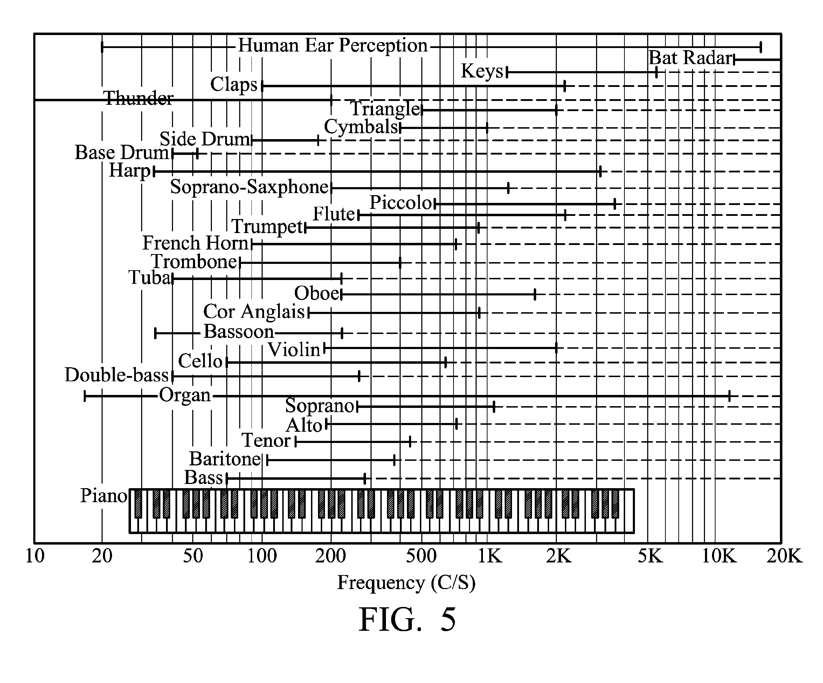

FIG. 5 is a diagram illustrating the specific acoustic frequencies used in the audio processing unit 230 according to an embodiment of the invention. In an embodiment, in addition to detecting a main object and the corresponding set of coordinates thereof from the depth image, the audio processing unit 230 may further link the main object to a specific frequency of the input audio signal. In the embodiment, the main object detected by the audio processing unit 230 may also be regarded as an "audio object" indicating an object with a specific audio feature. For example, the audio feature can be vocal sounds, or sounds of airplanes, bells, barks, thunder, birds, or specific musical instruments (e.g. drums, cellos, pianos, etc.), as illustrated in FIG. 5. The specific audio feature may also be the harmonic overtone or amplitude of a specific audio pattern that represents a unique audio feature of an object.

In an embodiment, the audio processing unit 230 may detect whether the position or moving speed exceeds the range for prediction. For example, the screen is horizontally divided into 5 equal regions A1 to A5 from left to right. If the audio object moves from region A3 to region A2 at a speed of over 30 pixels per second or with a variation in depth values of over 5 levels per second, the audio processing unit 230 may adjust the input audio signal. When the audio object remains still, or moves insignificantly or too slowly, the audio processing unit 230 does not adjust the input audio signal.

In another embodiment, the audio processing unit 230 may adjust the audio object (i.e. a human face) and corresponding acoustic frequency (e.g. male voice: 50∼250Hz, female voice: 200∼700Hz) independently. For example, the object information received by the audio processing unit 230 may further comprise the result of face recognition (e.g. male, female, or child) and the corresponding position. If the audio processing unit 230 detects the motion of human faces on the screen, the audio processing unit 230 may adjust the acoustic frequency of the input audio signal associated with the detected human face correspondingly, and other acoustic frequencies remain unchanged.

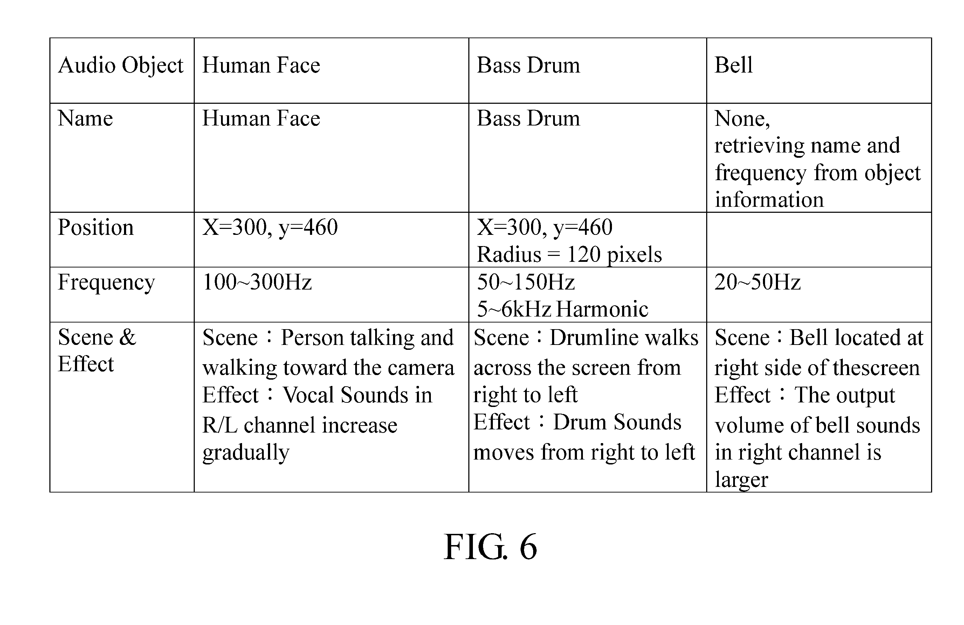

FIG. 6 is a table illustrating audio processing unit adjusting acoustic frequencies according to an embodiment of the invention. In yet another embodiment, as shown in FIG. 6, the audio processing unit 230 may adjust the detected audio object (e.g. a human face, a bass drum, or a bell) correspondingly. When the detected audio object is a male human face and the scene indicates that a male is talking and walking toward the camera, the audio processing unit 230 may gradually increase the volume of the acoustic frequency (e.g. 100∼300Hz) of the input audio signal associated with the detected male human face, so that the user may sense that the volume of vocal sounds in the left/right channels increases. When the detected audio object is a bass drum with a radius of 120 pixels and the scene is a drumline walking from the right side to the left side of the screen, the audio processing unit 230 may increase the volume of the acoustic frequency (e.g. 50∼150Hz) and the harmonic frequency (e.g. 5∼6Hz) of the bass drum, so that the user may sense that the volume of the sounds of the bass drum increases with the motion from right to left. If the audio object is a bell located at the right side of the screen according to the object information received by the audio processing unit 230, the audio processing unit 230 may increase the volume of the acoustic frequency of the bell (e.g. 20∼50Hz), so that the user may sense that the volume of the bell sounds is significantly higher in the right channel than in the left channel.

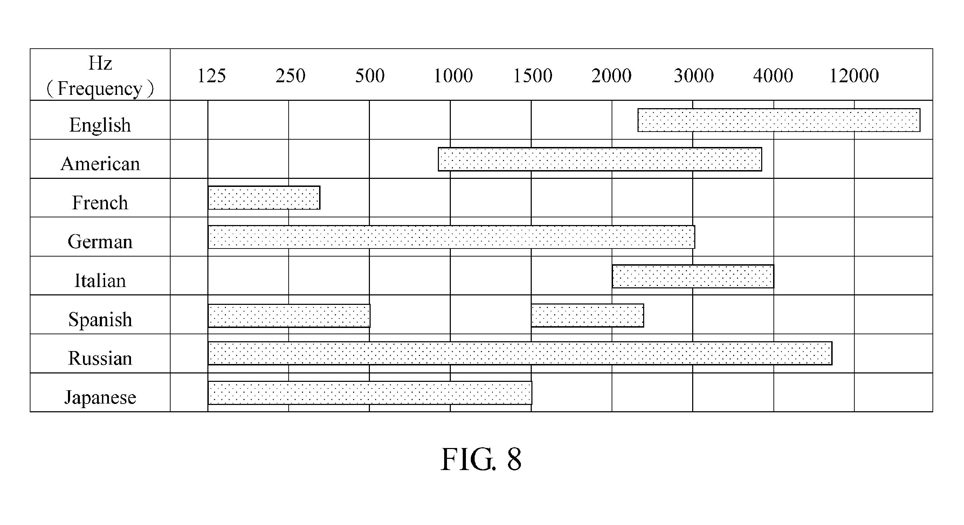

In yet another embodiment, the audio processing unit 230 may further receive the two-dimensional image and the corresponding depth image generated by the depth analyzing unit 210, and detect an audio object from the received two-dimensional image and the corresponding depth image. For example, the comparison methods for the audio processing unit 230 to detect the audio object may be non-pointed, pointed, or half-pointed. The non-pointed method may indicate that the audio processing unit 230 directly compares images without defining specific image content. The pointed method may indicate that the audio processing unit 230 directly searches for objects with specific image features (e.g. human faces) in the images. The half-pointed method may indicate that the audio processing unit 230 detects potential feature objects in the images, wherein the feature objects may have a specific trend on depth levels, the contour, or the moving speed. Accordingly, the audio processing unit 230 may analyze the feature object and retrieve the name and corresponding acoustic frequency of the feature object by using an image comparison method. FIG. 8 is a diagram illustrating the frequency range of multiple languages detected by the audio processing unit according to an embodiment of the invention. The audio processing unit 230 may obtain the language settings of the current display device by retrieving system settings associated with the audio object or related settings associated with the input audio signal, or obtain the language settings of the input audio signal by detecting multiple languages, as illustrated in FIG. 8.

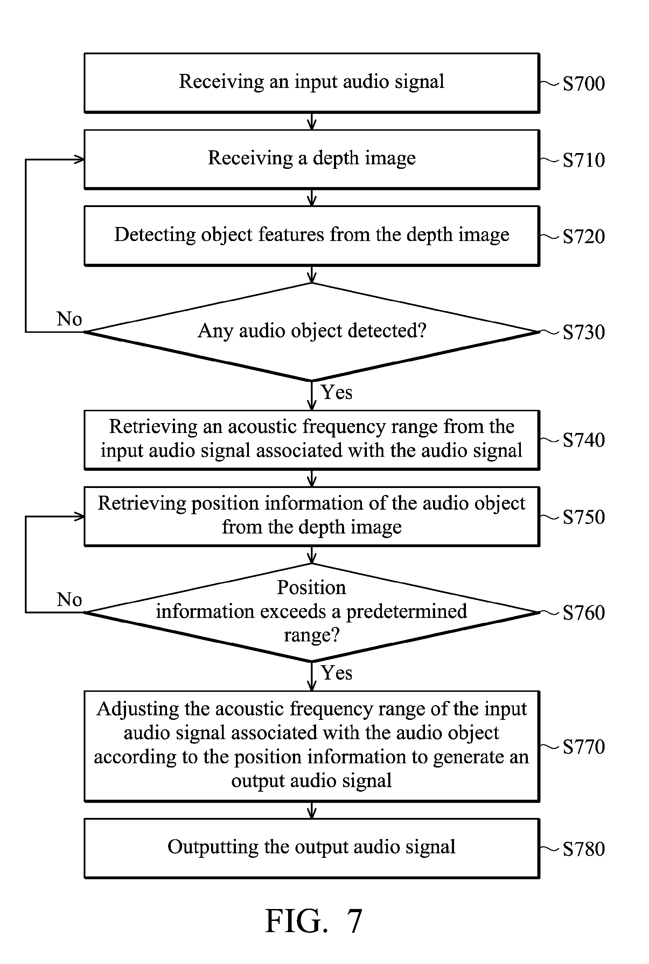

FIG. 7 is a flow chart illustrating the audio signal processing method according to an embodiment of the invention. In step S700, the audio processing unit 230 may receive an input audio signal. In step S710, the audio processing unit 230 may receive the depth image from the depth analyzing unit 210. In step S720, the audio processing unit 230 may detect object features from the depth image. In step 730, the audio processing unit 230 may determine whether any audio object is detected. If so, step S740 is performed. Otherwise, step S710 is performed to keep receiving depth images. In step S740, the audio processing unit 230 may retrieve an acoustic frequency range associated with the audio object from the input audio signal. In step S750, the audio processing unit 230 may retrieve position information (e.g. position or displacement) of the audio object from the depth image. In step S760, the audio processing unit 230 may determine whether the position information exceeds a predetermined range. If so, step S770 is performed. Otherwise, step S750 is performed to keep retrieving the position information of the audio object. In step S770, the audio processing unit 230 may adjust the acoustic frequency range of the input audio signal associated with the audio object according to the position information of the audio object to generate an output audio signal. In step S780, the audio processing unit 230 may output the output audio signal. It should be noted that the audio processing unit 230 may keep receiving the depth images or object information from the depth analyzing unit 210. When the audio processing unit 230 determines that there is no audio object existing in the depth image, the audio processing unit 230 does not adjust the input audio signal, which indicates that the output audio signal is the input audio signal in this case.

The methods, or certain aspects or portions thereof, may take the form of a program code embodied in tangible media, such as floppy diskettes, CD-ROMs, hard drives, or any other machine-readable (e.g., computer-readable) storage medium, or computer program products without limitation in external shape or form thereof, wherein, when the program code is loaded into and executed by a machine such as a computer, the machine thereby becomes an apparatus for practicing the methods. The methods may also be embodied in the form of a program code transmitted over some transmission medium, such as an electrical wire or a cable, or through fiber optics, or via any other form of transmission, wherein, when the program code is received and loaded into and executed by a machine, such as a computer, the machine becomes an apparatus for practicing the disclosed methods. When implemented on a general-purpose processor, the program code combines with the processor to provide a unique apparatus that operates analogously to application specific logic circuits.

While the invention has been described by way of example and in terms of the preferred embodiments, it is to be understood that the invention is not limited to the disclosed embodiments. To the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A multimedia processing system (200), comprising
a depth analyzing unit (210) configured to receive an input image and retrieve a depth image according to the input image; and
a audio processing unit (230) configured to receive an input audio signal and the depth image, detect an audio object and position information corresponding to the audio object from the depth image, and retrieve an acoustic frequency range corresponding to the audio object from the input audio signal;
wherein when the position information exceeds a predetermined range, the audio processing unit (230) adjusts the acoustic frequency range of the input audio signal according to the position information to generate an output audio signal.

2. The multimedia processing system as claimed in claim 1, wherein the input image is a first two-dimensional image, a stereoscopic image, or a second two-dimensional image with a corresponding second depth image.

3. The multimedia processing system as claimed in claim 1 or 2, wherein the position information comprises a position or a displacement value for the audio object.

4. The multimedia processing system as claimed in claim 3, wherein the audio processing unit (230) detects the audio object and the position information according to a specific depth value, an absolute extrema, or a local extrema of the depth image, or
wherein the audio processing unit (230) further determines a plurality of pixels having the same depth level as the audio object, and calculates the displacement value of the audio object, or
wherein the audio processing unit (230) further detects a depth variation value of a plurality of pixels having the same coordinates in different time, and retrieves the position information of the audio object according to the detected depth variation value.

5. The multimedia processing system as claimed in any of the claims 3 to 4, wherein the input audio signal comprises at least one channel, and the audio processing unit (230) further adjusts a volume ratio of each channel of the input audio signal according to the position or the displacement value.

6. The multimedia processing system as claimed in any of the claims 1 to 5, wherein the depth analyzing unit (210) further generates a two-dimensional image according to the input image, and the audio processing unit (230) further detects the audio object from the two-dimensional image.

7. The multimedia processing system as claimed in any of the claims 1 to 6, wherein the audio processing unit (230) further receives external object information, and adjusts the acoustic frequency range of the input audio signal according to the received external object information to generate a second output audio signal.

8. The multimedia processing system as claimed in claim 7, wherein the object information comprises coordinates, a position, a size and a region of a second audio object.

9. The multimedia processing system as claimed in any of the claims 6 to 8, further comprising:
a video processing unit (220) configured to receive the two-dimensional image and the depth image, and generate an output image according to the two-dimensional image and the depth image.

10. The multimedia processing system as claimed in claim 9, wherein the output image is the two-dimensional image or a stereoscopic image.

11. An audio signal processing method applied in a multimedia processing system, comprising:
receiving (710) an input image, and generating a depth image according to the input image;
receiving (700) an input audio signal and the depth image, and detecting an audio object and position information corresponding to the audio object from the depth image;
retrieving (740) an acoustic frequency range corresponding to the audio object from the input audio signal; and
adjusting (770) the acoustic frequency range of the input audio signal according to the position information to generate an output audio signal when the position information exceeds a predetermined range.

12. The audio signal processing method as claimed in claim 11, wherein the input image is a first two-dimensional image, a stereoscopic image, or a second two-dimensional image with a corresponding second depth image.

13. The audio signal processing method as claimed in claim 11 or 12, wherein the position information comprises a position or a displacement value for the audio object.

14. The audio signal processing method as claimed in claim 13, wherein the step of detecting the audio object and the position information further comprises:
detecting the audio object and the position information according to a specific depth value, an absolute extrema, or a local extrema of the depth image;
or
wherein the step of detecting the audio object and the position information further comprises:
determining a plurality of pixels having the same depth level as the audio object; and
calculating the displacement value of the audio object;
or
wherein the step of detecting the audio object and the position information further comprises:
detecting a depth variation value of a plurality of pixels having the same coordinates in different time; and
retrieving the position information of the audio object according to the detected depth variation value.

15. The audio signal processing method as claimed in any of the claims 13 to 14, wherein the input audio signal comprises at least one channel, and the audio processing unit (230) further comprises:
adjusting the volume ratio of each channel of the input audio signal according to the position or the displacement value.

16. The audio signal processing method as claimed in claim 15, further comprising:
generating a two-dimensional image according to the input image; and
detecting the audio object from the two-dimensional image.

17. The audio signal processing method as claimed in any of the claims 11 to 16 , further comprising:
retrieving external object information; and
adjusting the acoustic frequency range of the input audio signal according to the retrieved external object information to generate a second output audio signal.

18. The audio signal processing method as claimed in claim 17, wherein the object information comprises coordinates, a position, a size and a region of a second audio object.

19. The audio signal processing method as claimed in any of the claims 11 to 18, further comprising:
generating a two-dimensional image according to the input image; and
generating an output image according to the two-dimensional image and the depth image.

20. The audio signal processing method as claimed in claim 19, wherein the output image is the two-dimensional image or a stereoscopic image.
